# EUROPÄISCHE PATENTSCHRIFT

(11) **EP 3 519 273 B1**
(45) Veröffentlichungstag und Bekanntmachung des Hinweises auf die Patenterteilung: **14.04.2021**
(21) Anmeldenummer: 17777269.6
(22) Anmeldetag: 29.09.2017
(51) Int. Cl.: B62D 1/08, B62D 1/10

(54) **FAHRZEUGLENKUNG**
VEHICLE STEERING SYSTEM
DIRECTION DE VEHICULE

(30) Priorität: 30.09.2016 DE 202016005986 U
(43) Veröffentlichungstag der Anmeldung: 07.08.2019
(73) Patentinhaber: ZF Automotive Safety Germany GmbH, 63743 Aschaffenburg (DE); Rinspeed AG, 8126 Zumikon (CH)
(72) Erfinder: HELMSTETTER, Matthias, 63743 Aschaffenburg (DE); HIRZMANN, Guido, 63877 Sailauf (DE); KÄGI, Peter, 8634 Hombrechtikon (CH); MUECKE, Christian, 73563 Mögglingen (DE); SCHAUB, Swen, 73033 Göppingen (DE); RINDERKNECHT, Frank, M., 8700 Küsnacht (CH)
(74) Vertreter: ZF Patentabteilung - DIPS
(86) Internationale Anmeldenummer: PCT/EP2017/074808
(87) Internationale Veröffentlichungsnummer: WO 2018/060443

(56) Entgegenhaltungen:
- US-A- 1 542 949

## Beschreibung

Die Erfindung betrifft eine Fahrzeuglenkung gemäß dem Oberbegriff des Anspruchs 1, mit einem Lenkrad zum Verstellen eines Fahrtrichtungselements wie zum Beispiel eines lenkbaren Fahrzeugrads, wobei das Lenkrad beispielsweise über eine Lenksäule mit dem Fahrtrichtungselement gekoppelt ist.

Solche Fahrzeuglenkungen sind bereits allgemein aus dem Stand der Technik bekannt. Aktuelle Lenkräder können unter anderem Bedienelemente für elektrische Geräte wie Radio, Bordcomputer oder Navigationsgerät aufweisen. Ferner ist es inzwischen weit verbreitet, dass die Lenkradposition zum Beispiel über eine Höhenverstellung und/oder eine teleskopierbare Lenksäule an die individuellen Wünsche des Fahrers anpassbar ist.

Unabhängig von seiner exakten Position befindet sich das Lenkrad unmittelbar vor dem Fahrer und ist stets mit dem Fahrtrichtungselement gekoppelt, wobei üblicherweise wenigstens ein lenkbares Rad als Fahrtrichtungselement vorgesehen ist. Das Lenkrad kann dabei jederzeit vom Fahrer betätigt werden, um das wenigstens eine lenkbare Rad zu verstellen.

In jüngster Zeit geht die Entwicklung in der Kraftfahrzeugtechnik hin zum autonomen Fahren, bei dem ein manuelles Lenken durch den Fahrer nicht mehr notwendig ist. Dementsprechend wird das Lenkrad insbesondere im autonomen Fahrbetrieb, aber auch bei längerem Fahrzeugstillstand vom Fahrer als störend empfunden, da es die Bewegungsfreiheit einschränkt und den Fahrer bei anderen Aktivitäten wie Lesen, Essen, Trinken oder Arbeiten behindert. Ferner kann es zu unerwünschten Lenkbewegungen des Fahrzeugs kommen, wenn der Fahrer im autonomen Fahrbetrieb unbeabsichtigt an das Lenkrad stößt und dieses verdreht.

Die US 1,542,949 A zeigt bereits eine gattungsgemäße Fahrzeuglenkung mit einem schwenkbaren Lenkrad, welches in seiner Lenkposition mit einem Fahrtrichtungselement gekoppelt sowie zum Verstellen des Fahrtrichtungselements um eine Lenkachse drehbar ist und in seiner Nichtlenkposition vom Fahrtrichtungselement entkoppelt ist.

Aufgabe der Erfindung ist es, eine Fahrzeuglenkung zu schaffen, bei der das Lenkrad in einem autonomen Fahrbetrieb als Störfaktor beseitigt ist.

Erfindungsgemäß wird diese Aufgabe gelöst durch eine Fahrzeuglenkung mit den Merkmalen des Anspruchs 1. Das Lenkrad lässt sich folglich im autonomen Fahrbetrieb und/oder bei längerem Fahrzeugstillstand in die sogenannte Nichtlenkposition schwenken, in welcher das Multifunktionslenkrad vom Fahrtrichtungselement entkoppelt ist. Dementsprechend kann es nicht mehr zu unbeabsichtigten Lenkeingriffen durch den Fahrer kommen. Ferner bietet das Multifunktionslenkrad in der Nichtlenkposition vorteilhafte Zusatzfunktionen, die nicht der Steuerung des Fahrzeugs dienen, sondern den Fahrer bei einer Vielzahl von anderen Aktivitäten unterstützen. Daher wird das Lenkrad auch im autonomen Fahrbetrieb vom Fahrer nicht mehr als störend empfunden.

Erfindungsgemäß weist das Multifunktionslenkrad einen im Wesentlichen starren sowie vorzugsweise im Wesentlichen ebenen Lenkradkranz auf, wobei der Lenkradkranz insbesondere einen geschlossen umlaufenden Rahmen oder Ring bildet. Dadurch ist der Lenkradkranz einfach herstellbar, hinreichend stabil und lässt sich mit geringem Aufwand zu einer Arbeitsplatte, einem Tisch oder ähnlichem umfunktionieren.

In einer Ausführungsform der Fahrzeuglenkung definiert der Lenkradkranz eine Lenkradebene, welche sich im eingebauten Zustand der Fahrzeuglenkung sowie in einer Nichtlenkposition des Multifunktionslenkrads im Wesentlichen waagerecht erstreckt. Auf diese Weise lässt sich das Lenkrad mit geringem Aufwand als Tisch oder Ablage nutzen.

Erfindungsgemäß weist das Multifunktionslenkrad zur Montage an einer Lenkwelle einen Befestigungsarm auf, der sich vom Lenkradkranz bis zur Lenkwelle erstreckt und insbesondere als gekrümmter Arm ausgeführt ist. Dies stellt eine einfache, kompakte und preiswerte Befestigungsmöglichkeit für das Multifunktionslenkrad dar. Eine herkömmliche, zumeist recht massige Lenkradnabe ist dann nicht mehr nötig.

Ferner weist der Befestigungsarm erfindungsgemäß ein Gelenk, insbesondere ein Scharniergelenk auf, welches die Stellachse definiert. Dies ermöglicht ein einfaches Verschwenken des Lenkradkranzes auch um vergleichsweise große Schwenkwinkel.

Vorzugsweise ist das Gelenk hierbei zumindest in der Lenkposition und der wenigstens einen Nichtlenkposition des Multifunktionslenkrads arretierbar, insbesondere mechanisch, elektrisch oder elektromechanisch arretierbar.

Ferner kann in den Lenkradkranz und/oder in einen Befestigungsarm für den Lenkradkranz wenigstens ein Schaltelement integriert sein. Auf diese Weise lassen sich insbesondere im fahrergesteuerten Fahrbetrieb bestimmte Funktionen wie Hupe, Fahrtrichtungsanzeige, Scheibenwischer oder ähnliches einfach und platzsparend realisieren, ohne dass ein in der Nichtlenkfunktion störender, herkömmlicher Lenkstockschalter notwendig ist.

Gemäß einer weiteren Ausführungsform der Fahrzeuglenkung ist wenigstens ein separates Funktionselement vorgesehen, welches in einer Nichtlenkposition am Multifunktionslenkrad fixierbar ist. Vorzugsweise definiert der Lenkradkranz eine Lenkradebene, wobei das Funktionselement als flächiges Funktionselement ausgeführt ist und sich im Wesentlichen parallel zur Lenkradebene erstreckt, insbesondere in der Lenkradebene liegt. Das Funktionselement ist beispielsweise eine Platte, insbesondere eine Tischplatte, in die eine Tatstatur, ein Bildschirm, ein Touchpad, eine Becheröffnung, eine Ausnehmung, ein elektrischer Anschluss o.ä. integriert sein kann.

Gemäß einer weiteren Ausführungsform der Fahrzeuglenkung weist das Multifunktionslenkrad zwei Nichtlenkpositionen auf und ist im eingebauten Zustand der Lenkung ausgehend von seiner Lenkposition in eine obere Nichtlenkposition oder eine untere Nichtlenkposition schwenkbar. Vorzugsweise befindet sich dabei der Lenkradkranz des Multifunktionslenkrads in der oberen Nichtlenkposition näher an einer Armaturentafel des Fahrzeugs als in der unteren Nichtlenkposition. Damit kommt dem Multifunktionslenkrad in der oberen Nichtlenkposition eher eine Ablagefunktion mit größerer Bewegungsfreiheit für den Fahrer und in der unteren Nichtlenkposition eher eine Arbeitsfunktion in unmittelbarer Nähe des Fahrers zu.

Gemäß noch einer weiteren Ausführungsform der Fahrzeuglenkung kann in das Multifunktionslenkrad ein Airbagmodul integriert sein.

Weitere Merkmale und Vorteile der Erfindung ergeben sich aus der nachfolgenden Beschreibung einer bevorzugten Ausführungsform unter Bezugnahme auf die Zeichnungen. In diesen zeigt:
- Figur 1 eine schematische Darstellung einer bekannten Fahrzeuglenkung gemäß dem Stand der Technik;
- Figur 2 eine Seitenansicht einer erfindungsgemäßen Fahrzeuglenkung, in der eine Lenkposition und zwei Nichtlenkpositionen eines Multifunktionslenkrads angedeutet sind;
- Figur 3 eine perspektivische Ansicht der Fahrzeuglenkung gemäß Figur 2 in einer Lenkposition des Multifunktionslenkrads; und
- Figur 4 eine perspektivische Ansicht der Fahrzeuglenkung gemäß Figur 2 in einer Nichtlenkposition des Multifunktionslenkrads.

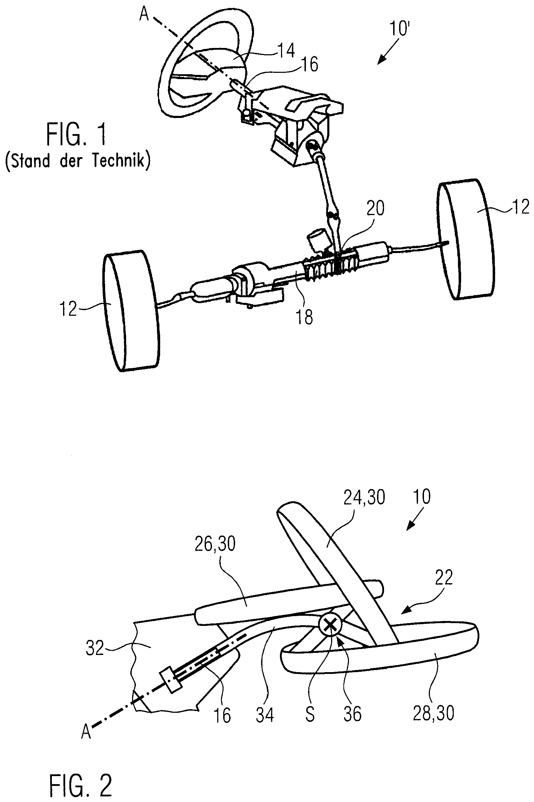

Die Figur 1 zeigt eine herkömmliche Fahrzeuglenkung 10' gemäß dem Stand der Technik mit zwei als lenkbaren Rädern ausgeführten Fahrtrichtungselementen 12, einem Lenkrad 14 zum Verstellen der Fahrtrichtungselemente 12 sowie einer Lenkwelle 16, die eine Lenkachse A definiert und das Lenkrad 14 mit den Fahrtrichtungselementen 12 koppelt.

Die Fahrzeuglenkung 10' ist hier beispielhaft eine Zahnstangenlenkung mit einer Zahnstange 18 und einem Ritzel 20, wobei das Ritzel 20 im vorliegenden Fall mechanisch mit dem Lenkrad 14 verbunden ist.

Im Rahmen der vorliegenden Erfindung ist alternativ auch denkbar, dass das Ritzel 20 und das Lenkrad 14 nur elektrisch gekoppelt sind und keine mechanische Verbindung vorliegt (sogenannte "steer-by-wire"-Lenkung).

Die Figur 2 zeigt eine erfindungsgemäße Fahrzeuglenkung 10 mit einem Multifunktionslenkrad 22, welches zwischen einer Lenkposition 24 und einer Nichtlenkposition 26, 28 um eine Stellachse S schwenkbar ist.

In der Lenkposition 24 des Multifunktionslenkrads 22 entspricht die allgemeine Funktionsweise der Fahrzeuglenkung 10 im Wesentlichen einer Funktionsweise der herkömmlichen Fahrzeuglenkung 10' gemäß Figur 1. So ist das Multifunktionslenkrad 22 in der Lenkposition 24 mit den Fahrtrichtungselementen 12 mechanisch oder elektrisch gekoppelt und zum Verstellen der Fahrtrichtungselemente 12 um die Lenkachse A drehbar.

In der Nichtlenkposition 26, 28 ist das Multifunktionslenkrad 22 hingegen von den Fahrtrichtungselementen 12 entkoppelt, sodass ein unbeabsichtigtes Verdrehen des Multifunktionslenkrads 22 im autonomen Fahrbetrieb nicht mehr zu unerwünschten Lenkbewegungen des Fahrzeugs führt.

Im vorliegenden Ausführungsbeispiel ist das Multifunktionslenkrad 22 in der Nichtlenkfunktion im Übrigen so fixiert, dass es nicht um die Lenkachse A drehbar ist. Dies sorgt für zusätzliche Stabilität des Multifunktionslenkrads 22.

Das Multifunktionslenkrad 22 weist gemäß Figur 2 zwei Nichtlenkpositionen 26, 28 auf und kann dementsprechend im eingebauten Zustand der Fahrzeuglenkung 10 ausgehend von seiner Lenkposition 24 in eine obere Nichtlenkposition 26 oder in entgegengesetzter Richtung in eine untere Nichtlenkposition 28 verschwenkt werden.

Anhand der Figur 2 wird ebenfalls deutlich, dass sich ein Lenkradkranz 30 des Multifunktionslenkrads 22 in der oberen Nichtlenkposition 26 näher an einer Armaturentafel 32 des Fahrzeugs befindet als in der unteren Nichtlenkposition 28.

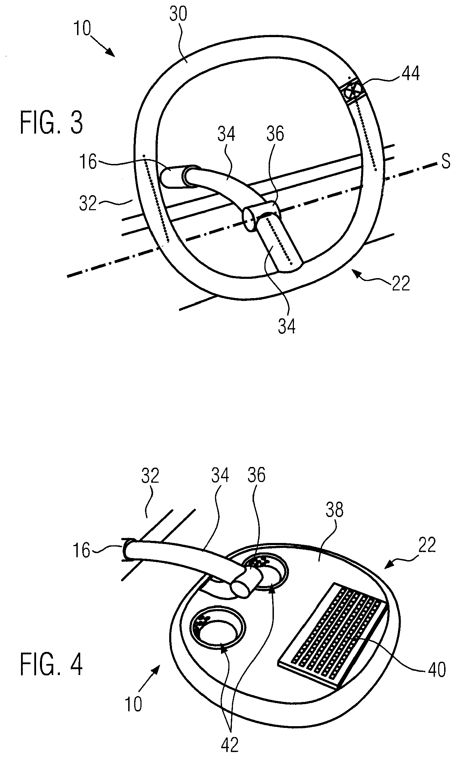

Die Figur 3 zeigt das Multifunktionslenkrad 22 in seiner Lenkposition 24. Dabei wird deutlich, dass das Multifunktionslenkrad 22 einen starren und ebenen Lenkradkranz 30 aufweist, der einen geschlossenen, umlaufenden Rahmen bildet.

Der ebene Lenkradkranz 30 definiert dabei eine Lenkradebene, welche sich im eingebauten Zustand der Fahrzeuglenkung 10 in den Nichtlenkpositionen 26, 28 im Wesentlichen waagerecht erstreckt (siehe auch Figuren 2 und 4).

Somit bietet das Multifunktionslenkrad 22 in der oberen Nichtlenkposition 26 eine vorteilhafte Ablagefunktion und in der unteren Nichtlenkposition 28 eher eine vorteilhafte Arbeitsposition für den Fahrer.

Gemäß Figur 3 weist das Multifunktionslenkrad 22 einen gekrümmten Befestigungsarm 34 zur Montage des Lenkradkranzes 30 an der Lenkwelle 16 der Fahrzeuglenkung 10 auf. Der Befestigungsarm 34 erstreckt sich vom Lenkradkranz 30 bis zur Lenkwelle 16, wobei eine Ende des Befestigungsarms 34 fest mit dem Lenkradkranz 30 und ein entgegengesetztes Ende des Befestigungsarms 34 fest mit der Lenkwelle 16 verbunden, beispielsweise verschweißt oder verschraubt ist.

Der Befestigungsarm 34 weist im Übrigen ein Gelenk 36 auf, welches die Stellachse S definiert. Das Gelenk 36 ist im dargestellten Ausführungsbeispiel der Fahrzeuglenkung 10 als Scharniergelenk ausgeführt und ermöglicht mit geringem Aufwand ein Verschwenken des Lenkradkranzes 30 in die einzelnen Lenk- und Nichtlenkpositionen 24, 26, 28.

Das Gelenk 36 ist im vorliegenden Fall zumindest in den in Figur 2 dargestellten Lenk- und Nichtlenkpositionen 24, 26, 28 des Multifunktionslenkrads 22 arretierbar, wobei die Arretierung mechanisch, elektrisch oder elektromechanisch erfolgen kann.

Wie in Figur 3 schematisch angedeutet, kann in den Lenkradkranz 30 oder in den Befestigungsarm 34 im Übrigen wenigstens ein Schaltelement 44 integriert sein, das insbesondere in der Lenkposition 24 des Multifunktionslenkrads 22 im fahrergesteuerten Fahrbetrieb hilfreich ist. Konkret handelt es sich zum Beispiel um ein Schaltelement 44 für eine Hupe, eine Fahrtrichtungsanzeige oder einen Scheibenwischer. Vorzugsweise sind solche Schaltelemente 44 am Befestigungsarm 34 zwischen dem Gelenk 36 und dem Lenkradkranz 30 oder seitlich am Lenkradkranz 30 (bezogen auf eine Neutralstellung des Multifunktionslenkrads 22 für eine Geradeausfahrt) angeordnet. Diese bevorzugten Bereiche für die Schaltelemente sind in Figur 3 punktiert hervorgehoben. Alternativ ist auch denkbar, dass die Schaltelemente 44 nicht in den Lenkradkranz 30 integriert, sondern seitlich am Lenkradkranz 30 angebracht sind.

Zudem ist denkbar, dass in das Gelenk 36 des Befestigungsarms 34 ein Sensor integriert ist, der die Lenkposition oder Nichtlenkpositionen des Lenkradkranzes 30 identifiziert und über eine Steuereinheit eine entsprechende Kopplung bzw. Entkopplung zwischen dem Multifunktionslenkrad 22 und den Fahrtrichtungselementen 12 veranlassen kann.

Die Figur 4 zeigt das Multifunktionslenkrad 22 in seiner (unteren) Nichtlenkposition 28. Es wird deutlich, dass die Fahrzeuglenkung 10 im dargestellten Ausführungsbeispiel ein separates Funktionselement 38 umfasst, welches in einer Nichtlenkposition 26, 28 am Multifunktionslenkrad 22, konkret am Lenkradkranz 30 des Multifunktionslenkrads 22 lösbar montiert, insbesondere verrastet werden kann.

Das Funktionselement 38 ist im vorliegenden Fall als flächige Platte ausgeführt, die in der vom Lenkradkranz 30 aufgespannten Lenkradebene liegt, sich aber alternativ auch parallel zu dieser Lenkradebene erstrecken kann.

Gemäß Figur 4 sind in das flächige Funktionselement 38 eine Tastatur 40 sowie zwei Öffnungen 40 integriert, die als Becherhalter dienen. Zusätzlich oder alternativ können in das Funktionselement 38 auch ein Bildschirm, ein Touchpad, elektrische Anschlüsse oder ähnliches integriert sein.

Insbesondere ist auch denkbar, dass mehrere Funktionselemente 38 mit unterschiedlichen Funktionalitäten vorgesehen sind, die der Fahrer abhängig von seiner gewünschten Aktivität entsprechend austauscht.

## Patentansprüche

1. Fahrzeuglenkung mit
einem Multifunktionslenkrad (22), das zwischen einer Lenkposition (24) und einer Nichtlenkposition (26, 28) um eine Stellachse (S) schwenkbar ist,
wobei das Multifunktionslenkrad (22) in der Lenkposition (24) mit einem Fahrtrichtungselement (12) gekoppelt sowie zum Verstellen des Fahrtrichtungselements (12) um eine Lenkachse (A) drehbar ist,
wobei das Multifunktionslenkrad (22) in der Nichtlenkposition (26, 28) vom Fahrtrichtungselement (12) entkoppelt ist, und
wobei das Multifunktionslenkrad (22) einen im Wesentlichen starren Lenkradkranz (30) sowie zur Montage an einer Lenkwelle (16) einen Befestigungsarm (34) aufweist, welcher sich vom Lenkradkranz (30) bis zur Lenkwelle (16) erstreckt,
**dadurch gekennzeichnet, dass** der Befestigungsarm (34) ein Gelenk (36) aufweist, welches die Stellachse (S) definiert.

2. Fahrzeuglenkung nach Anspruch 1, **dadurch gekennzeichnet, dass** der Lenkradkranz (30) im Wesentlichen eben ausgebildet ist.

3. Fahrzeuglenkung nach Anspruch 1 oder 2, **dadurch gekennzeichnet, dass** der Lenkradkranz (30) einen geschlossen umlaufenden Rahmen bildet.

4. Fahrzeuglenkung nach Anspruch 2 oder 3, **dadurch gekennzeichnet, dass** der Lenkradkranz (30) eine Lenkradebene definiert, welche sich im eingebauten Zustand der Fahrzeuglenkung (10) in der Nichtlenkposition (26, 28) im Wesentlichen waagerecht erstreckt.

5. Fahrzeuglenkung nach einem der vorhergehenden Ansprüche, **dadurch gekennzeichnet, dass** das Gelenk (36) des Befestigungsarms (34), welches die Stellachse (S) definiert, ein Scharniergelenk ist.

6. Fahrzeuglenkung nach einem der vorhergehenden Ansprüche, **dadurch gekennzeichnet, dass** das Gelenk (36) zumindest in der Lenkposition (24) und der Nichtlenkposition (26, 28) des Multifunktionslenkrads (22) arretierbar ist.

7. Fahrzeuglenkung nach einem der vorhergehenden Ansprüche, **dadurch gekennzeichnet, dass** in den Lenkradkranz (30) und/oder in den Befestigungsarm (34) für den Lenkradkranz (30) wenigstens ein Schaltelement integriert ist.

8. Fahrzeuglenkung nach einem der vorhergehenden Ansprüche, **gekennzeichnet durch** wenigstens ein separates Funktionselement (38), welches in einer Nichtlenkposition (24) am Multifunktionslenkrad (22), insbesondere am Lenkradkranz (30) des Multifunktionslenkrads (22) fixiert oder fixierbar ist.

9. Fahrzeuglenkung nach Anspruch 8, **dadurch gekennzeichnet, dass** der Lenkradkranz (30) eine Lenkradebene definiert, wobei das Funktionselement (38) als flächiges Funktionselement ausgeführt ist, welches sich im Wesentlichen parallel zur Lenkradebene erstreckt und insbesondere in der Lenkradebene liegt.

10. Fahrzeuglenkung nach einem der vorhergehenden Ansprüche, **dadurch gekennzeichnet, dass** das Multifunktionslenkrad (22) zwei Nichtlenkpositionen (26, 28) aufweist und im eingebauten Zustand der Fahrzeuglenkung (10) ausgehend von seiner Lenkposition (24) in eine obere Nichtlenkposition (26) oder eine untere Nichtlenkposition (28) schwenkbar ist.

11. Fahrzeuglenkung nach Anspruch 10, **dadurch gekennzeichnet, dass** sich der Lenkradkranz (30) des Multifunktionslenkrads (22) in der oberen Nichtlenkposition (26) näher an einer Armaturentafel (32) und/ oder einer Windschutzscheibe des Fahrzeugs befindet als in der unteren Nichtlenkposition (28).

12. Fahrzeuglenkung nach einem der vorhergehenden Ansprüche, **dadurch gekennzeichnet, dass** in das Multifunktionslenkrad (22) ein Airbagmodul integriert ist.

## Claims

1. A steering wheel system comprising
a multi-function steering wheel (22), which is pivotable about an adjustment axis (S) between a steering position (24) and a non-steering position (26, 28),
wherein the multi-function steering wheel (22) is coupled in the steering position (24) with a travel direction element (12) and is pivotable about a steering axis (A) for adjusting the travel direction element (12),
wherein the multi-function steering wheel (22) is decoupled from the travel direction element (12) in the non-steering position (26, 28), and
wherein the multi-function steering wheel (22) has a substantially rigid steering wheel rim (30) as well as a mounting arm (34) for mounting on a steering shaft (16) which extends from the steering wheel rim (30) to the steering shaft (16).
**characterized in that** the mounting arm (34) has a joint (36) which defines the adjustment axis (S).

2. The steering wheel system according to claim 1, **characterized in that** the steering wheel rim (30) has substantially plane shape.

3. The steering wheel system according to claim 1 or 2, **characterized in that** the steering wheel rim (30) forms a closed circumferential frame.

4. The steering wheel system according to claim 2 or 3, **characterized in that** the steering wheel rim (30) defines a steering wheel plane which extends substantially horizontally in an assembled state of the steering wheel system (10) in the non-steering position (26, 28).

5. The steering wheel system according to any one of the preceding claims, **characterized in that** the joint (36) of the mounting arm (34) defining the adjustment axis (S) is a hinge joint.

6. The steering wheel system according to any one of the preceding claims, **characterized in that** the joint (36) is lockable at least in the steering position (24) and non-steering position (26, 28) of the multi-function steering wheel (22).

7. The steering wheel system according to any one of the preceding claims, **characterized in that** at least one switching element is integrated in the steering wheel rim (30) and/or the mounting arm (34) for the steering wheel rim (30).

8. The steering wheel system according to any one of the preceding claims, **characterized by** at least one separate functional element (38) which is or can be fixed in a non-steering position (24) on the multi-function steering wheel (22), especially on the steering wheel rim (30) of the multi-function steering wheel (22).

9. The steering wheel system according to claim 8, **characterized in that** the steering wheel rim (30) defines a steering wheel plane, the functional element (38) being configured as a planar functional element which extends substantially in parallel to the steering wheel plane and lies especially in the steering wheel plane.

10. The steering wheel system according to any one of the preceding claims, **characterized in that** the multi-function steering wheel (22) has two non-steering positions (26, 28) and in the mounted state of the steering wheel system (10) is pivotable from its steering position (24) in an upper non-steering position (26) or a lower non-steering position (28).

11. The steering wheel system according to claim (10), **characterized in that** the steering wheel rim (30) of the multi-function steering wheel (22) is closer to a dashboard (32) and/or a windshield of the vehicle in the upper non-steering position (26) than in the lower non-steering position (28).

12. The steering wheel system according to any one of the preceding claims, **characterized in that** an airbag module is integrated in the multi-function steering wheel (22).

## Revendications

1. Direction du véhicule avec
un volant multifonction (22) qui peut pivoter autour d'un axe de réglage (S) entre une position de direction (24) et une position non directrice (26, 28)
pour lequel le volant multifonction (22) est couplé à un élément de direction de conduite (12) dans la position de direction (24) et peut tourner autour d'un axe de direction (A) pour régler l'élément de direction de conduite (12),
pour lequel le volant multifonction (22) est découplé de l'élément de direction de conduite (12) dans la position non directrice (26, 28), et
pour lequel le volant multifonction (22) présente une jante de volant (30) sensiblement rigide ainsi que, pour le montage sur un arbre de direction (16), un bras de montage (34) qui s'étend de la jante de volant (30) à l'arbre de direction (16),
**caractérisé en ce que** le bras de fixation (34) possède une articulation (36) qui définit l'axe de réglage (S).

2. Direction de véhicule selon la revendication 1, **caractérisé en ce que** la jante du volant (30) est sensiblement plate.

3. Direction de véhicule selon la revendication 1 ou 2, **caractérisé en ce que** la jante du volant (30) forme un cadre circonférentiel fermé.

4. Direction de véhicule selon la revendication 2 ou 3, **caractérisée en ce que** la jante du volant (30) définit un plan de volant, lequel, à l'état monté de la direction de véhicule (10), s'étend sensiblement horizontalement dans la position non directrice (26, 28).

5. Direction de véhicule selon l'une des revendications précédentes, **caractérisée en ce que** l'articulation (36) du bras de montage (34), laquelle définit l'axe de réglage (S), est une articulation à charnière.

6. Direction de véhicule selon l'une des revendications précédentes, **caractérisé en ce que** l'articulation (36) peut être verrouillée au moins dans la position de direction (24) et dans la position non directrice (26, 28) du volant multifonction (22).

7. Direction de véhicule selon l'une des revendications précédentes, **caractérisé en ce qu'**au moins un élément de commutation est intégré dans la jante du volant (30) et/ou dans le bras de fixation (34) pour la jante du volant (30).

8. Direction de véhicule selon l'une des revendications précédentes, **caractérisé par** au moins un élément fonctionnel séparé (38), lequel est fixé ou peut être fixé dans une position non directrice (24) sur le volant de direction multifonction (22), en particulier sur la jante (30) du volant de direction multifonction (22).

9. Direction de véhicule selon la revendication 8, **caractérisé en ce que** la jante de volant (30) définit un plan de volant, pour lequel l'élément fonctionnel (38) est conçu comme un élément fonctionnel plan, lequel s'étend essentiellement parallèlement au plan du volant et se trouve en particulier dans le plan du volant.

10. Direction de véhicule selon l'une des revendications précédentes, **caractérisé en ce que** le volant multifonction (22) présente deux positions non directrices (26, 28) et, à l'état monté du système de direction de véhicule (10), peut être pivoté à partir de sa position de direction (24) dans une position non directrice supérieure (26) ou une position non directrice inférieure (28).

11. Direction de véhicule selon la revendication 10, **caractérisé en ce que** la jante de volant (30) du volant multifonction (22) est située plus près d'un tableau de bord (32) et/ou d'un pare-brise du véhicule dans la position supérieure non directrice (26) que dans la position inférieure non directrice (28).

12. Direction de véhicule selon l'une des revendications précédentes, **caractérisé en ce qu'**un module airbag est intégré dans le volant multifonction (22).
